# EUROPEAN PATENT SPECIFICATION

(11) **EP 0 416 733 B1**
(45) Date of publication and mention of the grant of the patent: **11.01.1995**
(21) Application number: 90308036.4
(22) Date of filing: 23.07.1990
(51) Int. Cl.: F24D 3/14

(54) **Heat exchanger**
Wärmetauscher
Echangeur de chaleur

(30) Priority: 03.08.1989 US 389041
(43) Date of publication of application: 13.03.1991
(73) Proprietor: Trimble, Norman V., Surrey, British Columbia V3W OM2 (CA)
(72) Inventor: Trimble, Norman V., Surrey, British Columbia V3W OM2 (CA)
(74) Representative: Jones, Ian

(56) References cited:
- CH-A- 552 179
- US-A- 4 354 546
- US-A- 4 762 116

## Description

This invention relates to a heat exchanger, and more particularly, to a heat exchanger for conveying a heat containing fluid material in counter current pattern, and which can be installed in a wood or concrete floor and used to heat the floor and the earth space associated with the floor.

Radiant heating systems such as those used in heat concrete or wood floors of residential and commercial buildings typically employ copper hot water conveying pipe embedded within a concrete slab, or in sand beneath the slab thereby providing additional thermal mass. Heated water is circulated through the pipes to transfer thermal energy from the water to the concrete or sand, and in turn heat the space above the slab by radiation.

Heat transfer systems using copper pipe have several serious shortcomings. They are subject to corrosion, particularly by alkali in the concrete. The thermal expansion and contraction of the pipes together with the shifting and cracking of the concrete impose stresses which can cause leaks in the pipe. Those leaks are virtually impossible to repair without tearing up the floor.

Concrete has a low rate of heat transfer in comparison to copper. The use of low temperature water with copper pipe is inefficient and is not economically practical. Copper pipe is expensive and the cost of such systems becomes prohibitive unless relatively high water temperatures are employed.

An alternative to copper is thermoplastic pipe such as rigid or semi-flexible polyvinyl chloride pipe. Thermal expansion and contraction of the thermoplastic pipe is low. Since pipe can be expanded if necessary, freezing water which expands on becoming frozen cannot cause ruptures to the pipe. The elastic properties of the thermoplastic pipe also make it more resistant to damage caused by shifting or cracking of the concrete floor. The thermoplastic tubular system is low in initial cost and is particularly advantageous for efficient low-temperature heat transfer.

Three United States patents and a Canadian patent disclose inventions which are relevant to radiant heating systems. These patents are listed below.

| United States Patent Number | Inventor | Issue Date |
|---|---|---|
| 4,269,172 | Parker et al. | May 26, 1981 |
| 4,779,673 | Chiles et al. | October 25, 1988 |
| 4,782,889 | Bourne | November 8, 1988 |

| Canadian Patent Number | Inventor | Issue Date |
|---|---|---|
| 1,111,839 | Zinn et al. | November 3, 1981 |

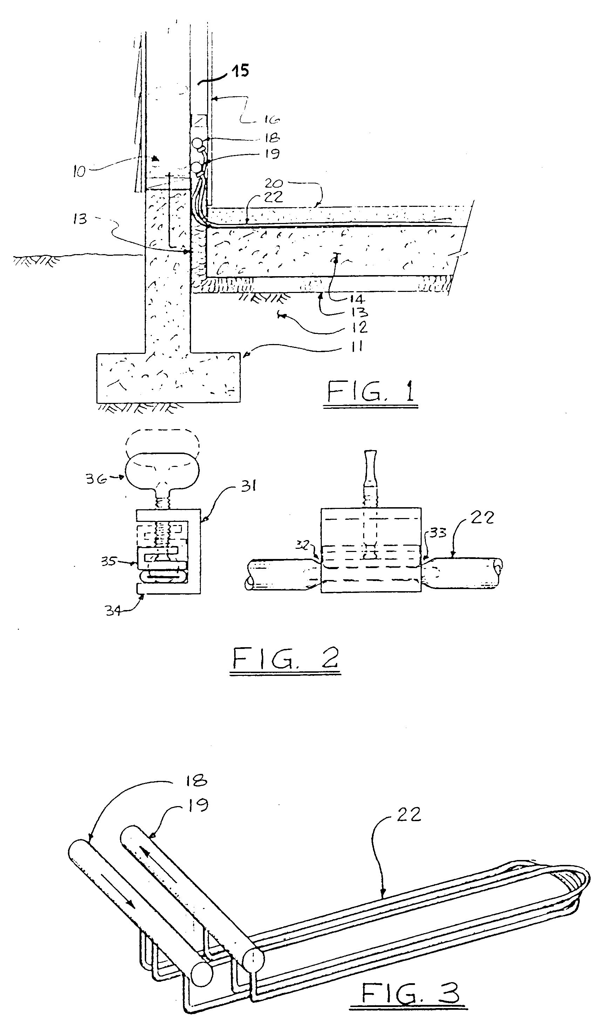

In U.S. Patent No. 4,269,172, Parker et al. disclose a solar hot-water heating system which is suitable for mounting on the roofs of buildings. The system includes manifolds 20 and 21, and triple tubes 18 and 22 (Figure 2). The result is an arrangement of circulation ducting which has heat exchange benefits and reduces overall heat loss.

Chiles et al. in U.S. Patent No. 4,779,673 disclose a heat exchanger construction which, in one embodiment, can be embedded in a concrete floor. The system includes tubing 20 connected to parallel manifolds 30 and 32 (see Figure 2). There does not appear to be any heat exchange capacity between the adjacent tubes.

Bourne in U.S. Patent No. 4,782,889 discloses a low mass hydronic radiant floor heating system which includes a metal deck which has regularly spaced troughs therein. Tubing is placed in the troughs to distribute heat by circulating warm liquid through the tubing. In this arrangement the tubing is not embedded in the concrete.

In Canadian Patent No. 1,111,839, Zinn et al. discloses a heat exchanger in the form of a mat having a plurality of fluid conducting tubes arranged parallel to one another and joined by connecting webs. More particularly, Zinn et al. disclose a heat exchanger for radiant floor use having a plurality of parallel fluid-conducting tubes of elastomeric material formed in an elongated mat with flexible webs connecting adjacent pairs of tubes. Opposite end portions of all of the tubes remote from the central mat section are free of the webs and are connected to respective hollow manifolds through respective holes in the manifold walls. The tubes or mats are formed by an integral extrusion of elastomeric material such as synthetic rubber and particularly EPDM (polymerized ethylene propylene diene monomer or terpolymer). A problem with plastics, and EPDM in particular, is that when hot water first enters tubes made from this plastic, the hot water forms a soft spot adjacent the inlet and consequently in situations where the tube is connected to a solid nipple or fitting, and the water is under pressure, the tube tends over time to work free from the nipple or fitting.

The invention pertains to a heat exchanger for conveying a heat containing fluid material in counter flow pattern comprising a hollow conduit comprised of three hollow elongated resilient fluid conducting tubes which are disposed parallel to one another with adjacent tubes joined to one another along a substantial portion of their length with no webs therebetween; and a first hollow elongated manifold with ports therein adapted for connection with the ends of the tubes; and a second hollow elongated manifold with ports therein adapted for connection with the ends of the tubes, the first ends of two of the three tubes being connected to the ports of the first manifold and the opposite ends of the same two tubes being connected to the ports of second manifold, and the first end of the third tube adjacent the first ends of the two tubes being connected to a port of the second manifold, while the opposite end of the third tube can be connected to a port of the first manifold.

In the heat exchanger the first and second manifolds can be arranged parallel to one another. A plurality of conduits can be connected to ports at spaced locations along the lengths of the first and second manifolds. The tubes of the conduits can be connected to the respective manifolds by port fittings which penetrate into the interior of the manifolds, and protrude from the manifolds so that he tubes can fit over the protrusions.

A heat exchanger as defined wherein the port fitting comprises a nut which has a female thread therein, said nut circumscribing the tube; a ferrule having a hollow cylindrical configuration circumscribing the tube inside the interior of the nut; a hollow cylindrical member which adapted to fit inside an end of the tube; and an elongated tubular member having male threads at one end thereof, the threat being adapted to receive the female thread of the nut, the other end being adapted to penetrate through the port of the manifold and be soldered thereto, the combination of the nut and the tubular member holding the tube between the ferrule and the cylindrical member. The connections of the three tubes of adjacent conduits can be alternated along the lengths of the first and second manifolds.

The invention is further described below, by way of example, with reference to the accompanying drawings, in which:
Figure 1 is a cross-sectional side view of a typical slab concrete floor incorporating a tube heat exchanger embodying the invention,
Figure 2 shows fragmentary end and side views of a clamp for isolating one or more of the tubes of the heat exchanger,
Figure 3 is a fragmentary perspective view showing a typical conduit installation and conduit connection to a pair of manifolds,
Figure 4 is a transverse section through one conduit showing its triple-tube construction,
Figure 5 is a fragmentary plan view of one of the ends of a conduit showing the triple tube arrangement adapted for connection to a manifold,
Figure 6 is a fragmentary plan view of a typical central a section of a conduit as installed between a pair of manifolds, and
FIGURE 7 is a fragmentary longitudinal section of the connection between one of the tube ends of a conduit and a fitting on a manifold.

FIGURE 1 shows in cross-section side elevation view a typical wood-frame wall 10 supported by a concrete foundation 11 over earth substrata 12. In the construction of the floor adjacent the wall 10 and foundation 11, insulation 13 is first laid horizontally on the earth substrata 12. An underlying concrete slab 14 is then applied over the insulation 13. Several of the tube heat exchanger conduits 22 of the invention are then placed spacially over the lower concrete slab 14. An overlying layer of concrete 20 is then poured over the conduits 22.

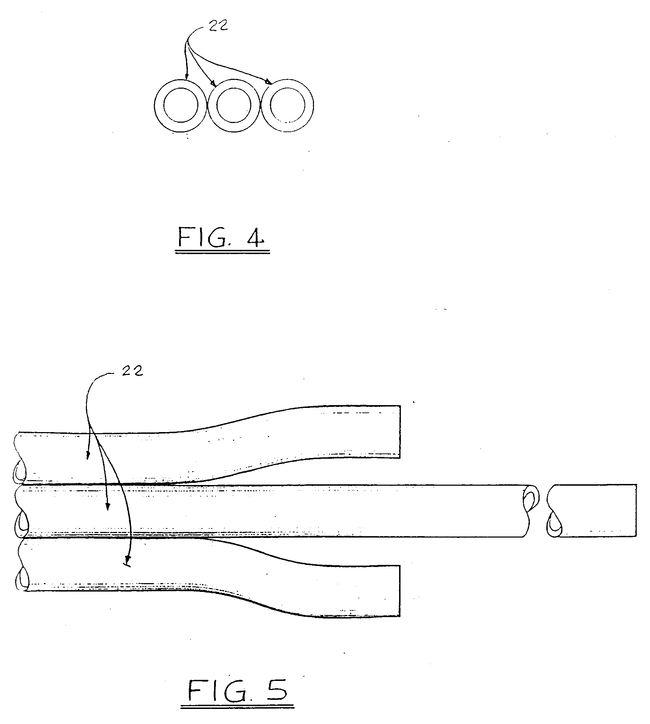

The three tubes of each conduit 22 are connected to the pair of manifolds 18 and 19 (shown in wall 10) according to the method shown in FIGURE 3. In a typical floor heating installation, there are several manifold pairs located adjacent the floor with numerous three-tube conduit lines 22 connecting each pair. The manifolds 18 and 19 are typically located in a space 15 between the wall 10 and interior wall finish 16. The final poured concrete floor slab 20 is applied as a matrix over the conduits 22 so that they are embedded in the concrete.

The construction described above is illustrative for purposes of disclosing the invention and will vary depending upon the conversions building codes and practices of different geographic regions.

In FIGURE 2 a form of clamp 31 is shown by which one of the tubes 22 may be pinched to prevent fluid flow through the tube 22. The clamp 31 has aligned holes 32 and 33 through which the end portion of the tube 22 is inserted. Opposed squeezing portions 34 and 35 compress the tube 22 to close it. Adjustable temperature control may be achieved by tightening the screw 36 of the clamp 31 reducing the flow of fluid through the tube 22. This method can be used to custom regulate flow through the network of tubes and correct over-heating problems in certain areas. In addition, if a leak occurs individual tubes 22 can be clamped off to isolate damage while the operation of the remainder of the tube network system continues to be unaffected.

FIGURE 3 shows in isometric view a typical connection of one triple-tube conduit 22 to one pair of manifold 18 and 19. The arrows indicate the direction of fluid flow through the manifolds. It is readily apparent in Figure 3 that each tube in the conduit constitutes a loop between the two manifolds 18 and 19 and that the heat-transfer fluid in the system flows through the full length of tube 22 when passing from one manifold to the other.

FIGURE 3 also demonstrates that the alternate connection of the tubes 22 to the manifolds 18 and 19 dictate that fluid flow in adjacent tubes will be in opposite (counter flow) directions. This reverse directional flow in alternate tubes 22 creates temperature averaging in the triple-tube conduits and provides for uniform floor temperatures. The manifolds 18 and 19 typically have a minimum inside diameter of 2.5 cm and may be made of a plastic such as PVC or a metal such as copper.

While FIGURE 3 shows only one set of conduit tubes 22, it will be understood that a series of conduits are spacially disposed and connected along the lengths of the two manifolds. This enables a network of conduits to be spacially laid over a floor surface. Better heat distribution for counter current flows can be alternated in adjacent triple tube conduit combinations.

FIGURE 4 depicts a transverse section through one conduit and shows the triple-tube arrangement of the tube heat exchanger.

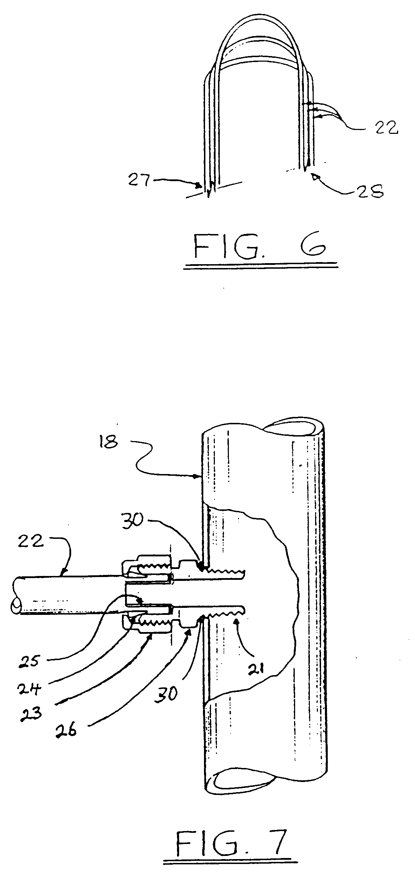

FIGURES 5, 6 and 7 illustrate the connection details of the triple-tube conduit of the tube heat exchanger to the manifold. Specifically, FIGURE 5 shows the separation of the three tubes of a conduit a few centimetres from the end before connection to the manifold. Each tube 22 is cut to the appropriate length for alternate connection to the respective manifolds.

FIGURES 5 and 6 illustrates the manner in which the three tube conduit is separated into independent tubes 22 by splitting one tube from another. This can be done by hand. This practice is performed at corners and at the ends where the conduit must pass through 90# or 180# bends. The tubes 22 can make smooth sharp turns when not attached to each other. No webs between the tubes are required.

FIGURE 7 shows an enlarged side cut-away view of the connector 21 on the wall of the manifold 18. The connector 21 in combination with other parts enables the tube 22 to be connected to the manifold 18 without fear of the tube 22 working free over time from the manifold 18. The thermoplastic tube 22 has a specified inside and outside diameter. A compression nut 23 of the size of the outside diameter of the tube 22 slides over the tube 22. A ferrule 24 with inside diameter equal to the outside diameter of the tube 22 slides over the tube. A hollow cylindrical insert 25 having an outside diameter at least as great as the inside diameter of the tube 22 and having an axial length greater than the axial length of the cylindrical hole in the connecting fitting 26 penetrating into the manifold 18 fits inside the end of the tube 22. To install, the tube 22 is inserted into the connecting fitting 26 on the manifold and the compression nut 23 is tightened on the ferrule 24 and the tube 22. The tube 22 is securely connected to the manifold 18 and cannot work free from constant contraction and expansion due to heat fluctuation. The end of the fitting 26 opposite the tube 22 is affixed to the manifold 18 by a ring of high temperature solder 30 around the fitting 26.

In accordance with the invention, the manifold-tube connecting fitting 26 protrudes 1.25 cm into the manifold 18. This protruding design discourages the possibility of foreign materials passing along the manifold 18 entering the thermoplastic tubing 22 and plugging the tubing over time. It also assists in balancing the water flow rate equally through all the tubes by creating a turbulence in the fluid.

In preparing a tubing arrangement for a radiant floor heating installation, the triple-tube conduit 22 is unrolled from an extended length and cut to individually designed lengths for connection to a manifold pair. In a given floor heating application, the length of tubing and the tubing arrangement are usually designed according to the heat loss properties of the specific building.

In a concrete slab installation, a layer of mastic or a wire mesh of size 15 cm x 15 cm x 0.32 cm placed over the tube supporting surface ensures that the tubing will remain in its designed arrangement during the concrete pouring process.

A radiant floor heating system is referred to in this disclosure because it is an obvious application for the subject tube heat exchanger invention. However, it is not intended to limit the invention to this example.

The tube heat exchanger of the invention has a continuous multi-tube profile which is easily covered by thin slabs of concrete. In the event of failure of any one tube, the damaged tube can be clamped off (using the clamp in FIGURE 2) adjacent to the manifolds (above the concrete floor) and isolated so that the remainder of the system continues to function properly. Similarly, selected tubes may be clamped off to isolate areas from the heat exchange fluid and thus make it possible to correct areas of over-heating.

Once the manifold pairs are installed as illustrated in FIGURE 1 and the tubes are distributed spacially over the floor surface, the ends of the tubes 22 are connected in alternating arrangement to alternating manifolds 18 and 19 (to set up the counter flow) using the fittings illustrated in FIGURE 7. Once all connections are completed, concrete is poured over the tubes 22 that are spread over the underlying floor. A radiant heated floor is formed.

## Claims

1. A heat exchanger for conveying a heat containing fluid material in counter-current pattern in the conduits of a heat exchanger in a floor, comprising:
(a) a hollow fluid conducting conduit having three hollow cylindrical elongated resilient fluid conducting tubes which are disposed parallel to one another with adjacent tubes joined to each other along a substantial portion of their length, with no webs therebetween; the tubes having first and second ends adapted for use in a heat exchanger in a floor;
(b) a first hollow fluid conducting elongated manifold with ports and fittings therein adapted for connection with the first ends of the tubes, the manifold being positioned exterior to the heated floor; and
(c) a second hollow fluid conducting elongated manifold with ports and fittings therein adapted for connection with the second ends of the tubes, the first ends of the two outer tubes being connected to the ports and fittings for the first manifold and the opposite ends of the same two tubes being connected to the ports and fittings of the second manifold, and the first end of the third middle tube abutting the first ends of the two outer tubes being connected to a port and fitting of the second manifold while the opposite end of the third middle tube is connected to a port and fitting of the first manifold, the fitting being connected to the port of a respective manifold.

2. A heat exchanger according to claim 1 wherein each fitting connected to the port of a respective manifold comprises:
(a) a hollow nut which has a female thread therein, and an inwardly projecting flange at one end thereof, said nut circumscribing the tube;
(b) a ferrule being tapered on the exterior and having a hollow cylindrical configuration in the interior circumscribing the tube, the ferrule being positioned completely inside the interior of the nut, the broader end of the exterior tapered ferrule abutting the flange of the nut;
(c) a hollow cylindrical member which is adapted to fit inside an end of the tube; and
(d) an elongated tubular member having a male thread at one end thereof adapted to receive the female thread of the nut, the end removed from the thread being adapted to penetrate through the port into the interior of the manifold, the combination of the nut and the tubular member holding the end of the tube between the tapered ferrule and the cylindrical member.

3. A heat exchanger as claimed in claim 1 or 2, wherein the first and second manifolds are arranged parallel to one another.

4. A heat exchanger as claimed in any preceding claim, wherein a plurality of fittings are spatially disposed in ports along the length of the first and second manifolds.

5. A heat exchanger as claimed in claim 4, wherein the end of the tubular member removed from the male thread penetrates into the manifold around 50% thereby inducing turbulence in the field flowing in the manifold.

6. A heat exchanger as claimed in any of claims 1 to 5, wherein the connections of the three tubes of adjacent conduits are alternated along the lengths of the first and second manifolds.

7. A heat exchanger as claimed in any of claims 2 to 6, wherein the exterior surface of the ferrule is tapered so that the thin end fits under the end of the tubular member with the male thread.

8. A heat exchanger as claimed in any of claims 2 to 7, wherein the conduit is formed of a thermoplastic material.

## Patentansprüche

1. Wärmeaustauscher zum Fördern eines wärmehaltigen Fluidmaterials im Gegenstrommuster in den Leitungen eines Wärmeaustauschers in einem Boden, umfassend
(a) eine hohle fluidleitende Leitung mit drei hohlen, zylindrischen, länglichen, elastischen, fluidleitenden Röhren, die parallel zueinander angeordnet sind, wobei benachbarte Röhren entlang eines wesentlichen Abschnitts ihrer Länge ohne Stege dazwischen miteinander verbunden sind, wobei die Röhren erste und zweite Enden haben, die für die Verwendung in einem Wärmeaustauscher in einem Boden angepaßt sind;
(b) einen ersten hohlen, fluidleitenden, länglichen Verteiler mit darin befindlichen Öffnungen und Armaturen, die für den Anschluß an die ersten Enden der Röhren angepaßt sind, wobei der Verteiler außerhalb des beheizten Bodens angeordnet ist; und
(c) einen zweiten hohlen, fluidleitenden, länglichen Verteiler mit darin befindlichen Öffnungen und Armaturen, die für den Anschluß an die zweiten Enden der Röhren angepaßt sind, wobei die ersten Enden der beiden äußeren Röhren an die Öffnungen und Armaturen für den ersten Verteiler angeschlossen sind und die gegenüberliegenden Enden derselben zwei Röhren an die Öffnungen und Armaturen des zweiten Verteilers angeschlossen sind und das erste Ende der dritten mittleren, an die ersten Enden der zwei äußeren Röhren anstoßenden Röhre an eine Öffnung und Armatur des zweiten Verteilers angeschlossen ist, während das gegenüberliegende Ende der dritten mittleren Röhre an eine Öffnung und Armatur des ersten Verteilers angeschlossen ist, wobei die Armatur an die Öffnung eines entsprechenden Verteilers angeschlossen ist.

2. Wärmeaustauscher nach Anspruch 1, wobei jede an die Öffnung eines entsprechenden Verteilers angeschlossene Armatur folgendes umfaßt:
(a) eine hohle Mutter, die ein Innengewinde und an einem Ende einen nach innen vorstehenden Flansch hat, wobei die genannte Mutter die Röhre umschreibt;
(b) ein Ring, der an seinem Äußeren konisch zuläuft und im Inneren eine die Röhre umschreibende, hohle, zylindrische Konfiguration hat, wobei der Ring vollständig im Inneren der Mutter liegt und das dickere Ende des außen konisch zulaufenden Rings an den Flansch der Mutter anstößt;
(c) ein hohles zylindrisches Element, das so angepaßt ist, daß es in ein Ende der Röhre paßt, und
(d) ein längliches röhrenförmiges Element, das an einem Ende ein zum Aufnehmen des Innengewindes der Mutter angepaßtes Außengewinde hat, wobei das vom Gewinde entfernte Ende so angepaßt ist, daß es durch die Öffnung in das Innere des Verteilers eindringen kann, wobei die Kombination von Mutter und röhrenförmigem Element das Ende der Röhre zwischen dem konisch zulaufenden Ring und dem zylindrischen Element hält.

3. Wärmeaustauscher nach Anspruch 1 oder 2, wobei der erste und zweite Verteiler parallel zueinander angeordnet sind.

4. Wärmeaustauscher nach einem der vorangehenden Ansprüche, wobei eine Mehrzahl von Armaturen in Öffnungen entlang der Länge des ersten und zweiten Verteilers räumlich angeordnet sind.

5. Wärmeaustauscher nach Anspruch 4, wobei das Ende des vom Außengewinde entfernten röhrenförmigen Elements zu etwa 50 % in den Verteiler eindringt und dadurch in dem im Verteiler fließenden Fluid Wirbelströmungen verursacht.

6. Wärmeaustauscher nach einem der Ansprüche 1 bis 5, wobei die Anschlüsse der drei Röhren benachbarter Leitungen entlang der Länge des ersten und zweiten Verteilers abwechselnd angeordnet sind.

7. Wärmeaustauscher nach einem der Ansprüche 2 bis 6, wobei die äußere Oberfläche des Rings konisch so zuläuft, daß das dünne Ende unter das Ende des röhrenförmigen Elements mit Außengewinde paßt.

8. Wärmeaustauscher nach einem der Ansprüche 2 bis 7, wobei die Leitung aus einem thermoplastischen Material geformt ist.

## Revendications

1. Echangeur thermique pour transmettre une matière fluide contenant de la chaleur à contre-courant dans les conduits d'un échangeur thermique dans un plancher, comprenant:
(a) un conduit conducteur de fluide creux ayant trois tubes conducteurs de fluide élastiques allongés cylindriques creux qui sont disposés parallèlement l'un par rapport à l'autre les tubes adjacents étant joints l'un à l'autre sur une partie substantielle de leur longueur, sans tissu entre eux; les tubes ayant des premières et secondes extrémités adaptées pour l'utilisation dans un échangeur thermique dans un plancher;
(b) un premier manifold allongé conducteur de fluide creux comportant des raccords et orifices adaptés pour la connexion avec les premières extrémités des tubes, le manifold étant positionné à l'extérieur du plancher chauffé; et
(c) un second manifold allongé conducteur de fluide creux comportant des orifices et raccords adaptés pour la connexion avec les secondes extrémités des tubes, les premières extrémités des deux tubes extérieurs étant connectées aux orifices et raccords du premier manifold et les extrémités opposées des mêmes deux tubes étant connectées aux orifices et raccords du second manifold, et la première extrémité du troisième tube du milieu contiguë aux premières extrémités des deux tubes extérieurs étant connectée à un orifice et raccord du second manifold tandis que l'extrémité opposée du troisième tube du milieu est connectée à un orifice et raccord du premier manifold le raccord étant connecté à l'orifice d'un manifold respectif.

2. Echangeur thermique selon la revendication 1, dans lequel chaque raccord connecté à l'orifice d'un manifold respectif comprend:
(a) un écrou creux qui comporte un filet de vis intérieur, et une bride saillante vers l'intérieur à l'une de ses extrémités, ledit écrou circonscrivant le tube:
(b) une virole étant taillée en cône sur l'extérieur et ayant une configuration cylindrique creuse à l'intérieur circonscrivant le tube, la virole étant positionnée complètement à l'intérieur de l'écrou, la plus large extrémité de la virole conique extérieure étant contiguë à la bride de l'écrou;
(c) un élément cylindrique creux qui est adapté pour être placé à l'intérieur d'une extrémité du tube; et
(d) un élément tubulaire allongé ayant un filet de vis extérieur à l'une de ses extrémités adapté pour recevoir le filet de vis intérieur de l'écrou, l'extrémité éloignée du filet étant adaptée pour pénétrer dans l'orifice à l'intérieur du manifold, la combinaison de l'écrou et de l'élément tubulaire maintenant l'extrémité du tube entre la virole conique et l'élément cylindrique.

3. Echangeur thermique selon la revendication 1 ou 2, dans lequel les premier et second manifolds sont disposés parallèlement l'un par rapport à l'autre.

4. Echangeur thermique selon l'une quelconque des revendications précédentes, dans lequel une pluralité de raccords sont disposés spatialement dans des orifices le long de la longueur des premier et second manifolds.

5. Echangeur thermique selon la revendication 4, dans lequel l'extrémité de l'élément tubulaire éloignée du filet de vis extérieur pénètre dans le manifold sur environ 50% provoquant de ce fait une turbulence dans la fluide s'écoulant dans le manifold.

6. Echangeur thermique selon l'une quelconque des revendications 1 à 5, dans lequel les connexions des trois tubes de conduits adjacents sons alternées le long des longueurs des premier et second manifolds.

7. Echangeur thermique selon l'une quelconque des revendications 2 à 6, dans lequel la surface extérieure de la virole est conique de sorte que l'extrémité fine se place sous l'extrémité de l'élément tubulaire au filet de vis extérieur.

8. Echangeur thermique selon l'une quelconque des revendications 2 à 7, dans lequel le conduit est formé d'une matière thermosplastique.
